# FASCICULE DE BREVET EUROPEEN

(11) **EP 1 036 947 B1**
(45) Date de publication et mention de la délivrance du brevet: **26.05.2004**
(21) Numéro de dépôt: 00112762.0
(22) Date de dépôt: 16.03.1999
(51) Int. Cl.: F16B 13/00, F16B 33/02

(54) **Cheville d'ancrage pour matériau friable**
Verankerungsdübel für sprödes Material
Anchoring dowel for brittle material

(30) Priorité: 16.03.1998 FR 9803175
(43) Date de publication de la demande: 20.09.2000
(62) Demande divisionnaire de: 99400638.5
(73) Titulaire: SOCIETE DE PROSPECTION ET D'INVENTIONS TECHNIQUES SPIT, 26501 Bourg-Les-Valence Cédex (FR)
(72) Inventeur: Gauthier, Alain, 07300 Saint Jean De Muzols (FR); Barthomeuf, Jean-Paul, 26300 Bourg De Peage (FR)
(74) Mandataire: Bloch, Gérard

(56) Documents cités:
- EP-A- 0 575 295
- WO-A-96/16273
- FR-A- 2 588 332
- US-A- 3 711 138
- US-A- 5 529 449

## Description

L'invention concerne une cheville d'ancrage pour matériau friable, tel qu'un panneau de cloison sèche par exemple du type de celui de la marque protégée placoplâtre.

Plus particulièrement, l'invention concerne une cheville d'ancrage pour matériau friable, comprenant un corps globalement creux avec une extrémité de perçage, à l'autre extrémité, une collerette d'appui et un filet de vis extérieur. Une telle cheville est notamment enseignée par le document EP-A-0165674.

Pour insérer une telle cheville dans une paroi friable, pour reprendre cet exemple, il suffit de visser la cheville dans la paroi sans qu'il soit nécessaire de percer au préalable de trou dans la paroi, comme cela est le cas avec de nombreuses autres chevilles d'ancrage. Grâce à cela, on simplifie beaucoup la pose.

Avec de telles chevilles, il existe néanmoins un risque de dévissage de la cheville, et donc de retrait inopportun de celle-ci de la paroi.

La présente invention vise à pallier cet inconvénient.

A cet effet, l'invention concerne une cheville d'ancrage pour matériau friable, comprenant un corps globalement creux avec une extrémité de perçage, à l'autre extrémité, une collerette d'appui, un filet de vis extérieur et des moyens anti-rotation, caractérisée par le fait que le pas du filet extérieur du corps cylindrique globalement creux est dégressif vers la collerette d'appui, ce qui rend plus difficile la rotation de la cheville.

Tout d'abord, FR-A-2588332 concerne les cuves de réfrigérateur de congélateur.

Ensuite, FR-A-2588332 enseigne un élément dont le filet a été conformé pour compenser des tolérances et pas dans un but de contrarier la rotation de la cheville.

Ce filet a un diamètre qui décroît vers l'extrémité de la cheville.

La cheville du document FR-A-2588332 ne saurait donc constituer une cheville d'ancrage pour matériau friable. Par conséquent, l'invention revendiquée ne saurait être le fruit de la combinaison de EP-A-0 165 674 et de FR-A-2 588 332.

Avantageusement, le pas du filet est sensiblement nul au voisinage de la collerette d'appui.

Grâce à cela, la rotation de la cheville en sens inverse est rendue encore plus difficile.

Avantageusement encore, l'épaisseur du filet s'affine vers la collerette d'appui.

Dans une forme de réalisation particulière, le filet ménage au moins une encoche anti-rotation.

L'encoche contribue également à empêcher la rotation de la cheville en mordant le matériau.

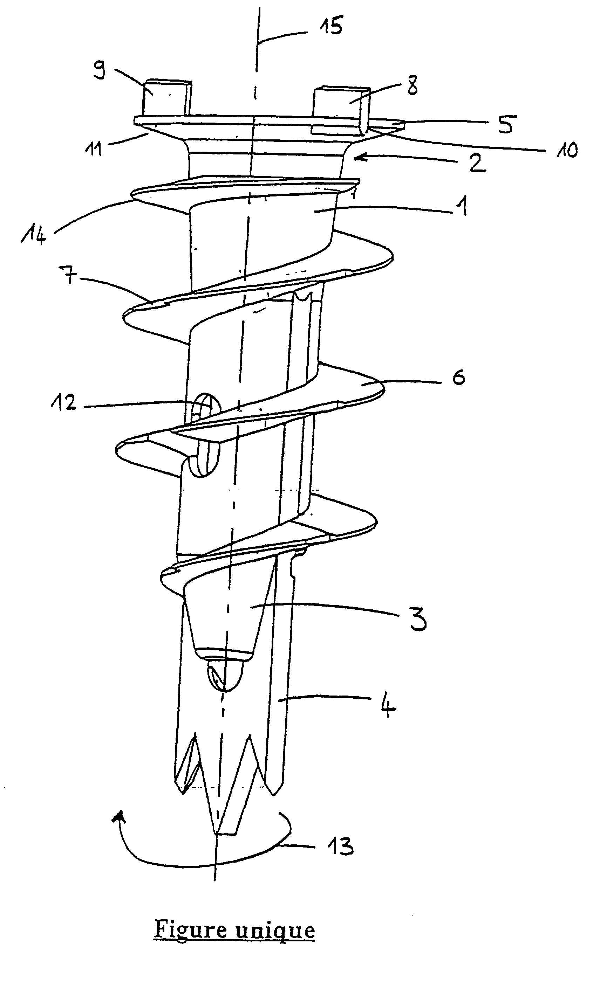

L'invention sera mieux comprise à l'aide de la description suivante d'une forme de réalisation particulière de la cheville de l'invention en référence à la figure unique annexée qui représente une vue en perspective de la cheville d'ancrage selon la forme de réalisation particulière.

La cheville d'ancrage, d'axe 15, est prévue pour la fixation d'un élément de fixation dans un support en matériau friable et comprend un corps cylindrique globalement creux 1, une extrémité de perçage 4 et une collerette d'appui 5. Un alésage axial s'étend à travers le corps cylindrique creux 1 et à travers les deux extrémités 2, 3 de celui-ci. L'extrémité de perçage 4 et la collerette d'appui 5 sont respectivement solidaires des deux extrémités 3, 2 du corps 1.

L'extrémité de perçage, plus précisément décrite dans le document EP-0165674, présente la forme d'une lame pourvue à son extrémité libre ici de trois dents pointues de perçage.

La collerette d'appui 5 ménage deux ouvertures 10, 11 de réception d'un téton anti-rotation 8, 9, fixé de façon détachable à la collerette 5 et déplaçable dans l'ouverture 10, 11. Les ouvertures 10, 11 consistent en l'espèce en des encoches ménagées dans le bord périphérique de la collerette 5 et diamétralement opposées l'une de l'autre par rapport à l'axe 15. Les deux tétons 8, 9, présentent globalement une forme de parallélépipède rectangle plat et s'étendent dans un plan axial, contenant l'axe 15. Ils font saillie de la collerette 5 du côté du corps 1, par une extrémité amincie de pénétration dans un matériau récepteur, et du côté opposé au corps 1, par une partie d'entraînement. Sous l'action d'une frappe exercée sur la partie d'entraînement dans une direction parallèle à l'axe 15, orientée vers l'extrémité de perçage 4, les tétons 8, 9 sont destinés à se détacher de la collerette d'appui 5, et à se déplacer dans les ouvertures 10, 11, dans une direction parallèle à l'axe 15, afin d'être partiellement enfoncés dans un matériau de réception de la cheville et ainsi s'ancrer à la fois dans la collerette d'appui 5, grâce aux ouvertures 10, 11, et dans le matériau récepteur, ce double ancrage ayant pour effet de bloquer la rotation de la cheville. Les ouvertures 10, 11 permettent ainsi d'ancrer les tétons 8, 9 à la fois dans la collerette d'appui 5 et dans le matériau récepteur.

Un filet de vis extérieur 6 entoure le corps cylindrique creux 1, sensiblement sur toute sa hauteur parallèlement à l'axe 15. Le bord extérieur du filet ménage ici des encoches 7.

Par définition, le pas du filet 6 correspond à la hauteur, le long de l'axe du corps 1, parcourue par le filet 6 lorsqu'il fait un tour complet de 360°.

Le pas du filet 6 est dégressif depuis l'extrémité de perçage 4, où il est ici sensiblement égal à 6,35mm, vers la collerette 5 où il est ici nul. La partie 14 du filet 6, située au voisinage de la collerette 5 et ayant un pas nul, contribue ainsi à rendre difficile la rotation de la cheville en sens inverse au sens d'insertion 13.

En outre, l'épaisseur du filet 6 s'affine vers la collerette 5, afin de faciliter l'insertion de la cheville dans le matériau friable et éviter la formation de boursouflures de matériau friable, sous la collerette 5, lors de la pose de la cheville.

Le corps cylindrique creux 1 ménage ici une lumière d'évacuation 12 prévue le long du parcours du filet 6, à un endroit où le filet 6 est interrompu.

Après la description structurelle de la cheville d'ancrage, sa pose dans un support en matériau friable, en l'espèce une cloison sèche en matériau de la marque protégée placoplâtre, va maintenant être décrite.

On insère la cheville dans la cloison tout en la "vissant", autrement dit tout en l'entraînant en rotation dans le sens d'insertion 13, à l'aide d'un outil d'entraînement en rotation, en l'espèce un outil de vissage. Lors de son insertion dans le matériau friable, la cheville perce elle-même son trou de réception dans le matériau, à l'aide de son extrémité de perçage 4. On entraîne ainsi la cheville jusqu'à ce que la collerette d'appui 5 vienne en appui contre la margelle du trou.

Puis à l'aide d'un outil de frappe, ici un marteau, on frappe vers le support de la partie d'entraînement des tétons 8, 9 qui, sous l'action de la frappe, se détachent de la collerette 5 et se déplacent dans les ouvertures 10, 11 en s'enfonçant partiellement dans le support. On soulignera ici que la pénétration des tétons dans le matériau récepteur est facilitée par leurs extrémités amincies. Après l'enfoncement partiel des tétons 8, 9 dans le support, une partie extérieure de chaque téton 8 (9) (l'extérieur et l'intérieur faisant référence à l'extérieur et à l'intérieur du trou) demeure dans l'encoche 10 (11). Les tétons 8, 9 sont ainsi ancrés à la fois dans la collerette 5 et dans le support récepteur et, par conséquent, bloquent la rotation de la cheville, en particulier dans le sens inverse au sens d'insertion 13. Grâce à cela, la cheville ne risque pas de se dévisser. Le pas du filet 6, du fait qu'il est nul au voisinage de la collerette 5, contribue à rendre difficile la rotation de la cheville en sens inverse au sens d'insertion 13 de la cheville. Les encoches anti-rotation 7, mordant le matériau, ont également pour effet d'empêcher la rotation de la cheville.

Puis on introduit dans l'alésage du corps 1 de la cheville un élément de fixation à l'aide duquel on peut fixer un objet au support.

On soulignera que la lumière d'évacuation 12 permet d'évacuer le matériau friable ayant pénétré dans l'alésage du corps 1, notamment lors de l'introduction de l'élément de fixation dans la cheville.

Dans la description qui vient d'être faite, la collerette d'appui ménage deux ouvertures de réception d'un téton anti-rotation. On pourrait ne ménager qu'une seule ouverture, ou plus de deux ouvertures.

Les ouvertures de réception d'un téton anti-rotation pourraient être ménagées non pas dans le bord de la collerette d'appui mais à l'intérieur de celle-ci.

Par ailleurs, les tétons anti-rotation pourraient être non fixés à la collerette d'appui et introduits dans les ouvertures lors de la pose de la cheville.

## Revendications

1. Cheville d'ancrage pour matériau friable, comprenant un corps globalement creux (1) avec une extrémité de perçage (4), à l'autre extrémité, une collerette d'appui (5), un filet de vis extérieur (6) et des moyens anti-rotation (6,7), **caractérisée par le fait que** le pas du filet extérieur (6) du corps cylindrique globalement creux (1) est dégressif vers la collerette d'appui (5), ce qui rend plus difficile la rotation de la cheville.

2. Cheville selon la revendication 1, dans laquelle le pas du filet (6, 14) est sensiblement nul au voisinage de la collerette d'appui (5).

3. Cheville selon l'une des revendications 1 et 2, dans laquelle l'épaisseur du filet (6) s'affine vers la collerette d'appui (5).

4. Cheville selon l'une des revendications 1 à 3, dans laquelle le filet (6) ménage au moins une encoche anti-rotation (7).

5. Cheville selon l'une des revendications 1 à 4, dans laquelle il est prévu au moins une lumière d'évacuation (12).

## Patentansprüche

1. Verankerungsdübel für sprödes Material, der einen allgemein hohlen Körper (1) mit einem Bohrende (4), am anderen Ende einem Anlageflansch (5), einem Außengewinde (6) und Drehverhinderungsmitteln (6, 7) aufweist, **dadurch gekennzeichnet, dass** die Steigung des Außengewindes (6) des allgemein hohlen zylindrischen Körpers (1) zum Anlageflansch (5) hin abnimmt, wodurch die Drehung des Dübels erschwert wird.

2. Dübel nach Anspruch 1, bei dem die Steigung des Gewindes (6, 14) in der Nähe des Anlageflansches (5) im Wesentlichen Null ist.

3. Dübel nach Anspruch 1 oder 2, bei dem sich die Dicke des Gewindes (6) zum Anlageflansch (5) hin verringert.

4. Dübel nach einem der Ansprüche 1 bis 3, bei dem das Gewinde (6) mindestens eine Drehverhinderungskerbe (7) umfasst.

5. Dübel nach einem der Ansprüche 1 bis 4, bei dem mindestens ein Abführschlitz (12) vorgesehen ist.

## Claims

1. Anchoring plug for friable material, comprising a generally hollow body (1) with a drilling end (4), at the other end, an abutment flange (5), an external screw thread (6) and anti-rotation means (6, 7), **characterised by** the fact that the pitch of the external thread (6) of the generally hollow cylindrical body (1) decreases towards the abutment flange (5), which makes rotation of the plug more difficult.

2. Plug according to claim 1, in which the pitch of the thread (6, 14) is substantially zero in the vicinity of the abutment flange (5).

3. Plug according to one of claims 1 and 2, in which the thickness of the thread (6) gets thinner towards the abutment flange (5).

4. Plug according to one of claims 1 to 3, in which the thread (6) provides at least one anti-rotation notch (7).

5. Plug according to one of claims 1 to 4, in which at least one evacuation aperture (12) is provided.
